# EUROPEAN PATENT APPLICATION

(11) **EP 3 815 535 A1**
(43) Date of publication of application: **05.05.2021**
(21) Application number: 20204180.2
(22) Date of filing: 27.10.2020
(51) Int. Cl.: A21C 5/04, A21C 7/00

(54) **MACHINE FOR PORTIONING OF DOUGH**

(30) Priority: 28.10.2019 IT 201900019900
(71) Applicant: C.S.C. Sartori S.r.l., 35010 San Giorgio delle Pertiche (PD) (IT)
(72) Inventor: SARTORI, Michele, 36010 Roana (VI) (IT)
(74) Representative: Braidotti, Andrea

(57) **Abstract**

Machine (1) portioning a dough (4) comprising:
- a chamber (18), which develops along a first prevalent development direction,
- a thrust member (20) configured to push at least a portion of said dough (4) inside at least one recess (36) which is provided in a rotating drum (30), which is provided with a substantially transversal with respect to the prevailing development direction of said chamber (18); said recess (36) of said rotating drum (30) being configured to be substantially facing a first opening (34) of said chamber (18) and to said thrust member (20) and to receive a portion of said dough (4),
- said thrust member (20) being slidably inserted inside said chamber (18) and being movable along a movement direction, substantially parallel with the first prevalent development direction of said chamber (18), between a first retracted position, in which said thrust member (20) releases at least one feeding mouth for the passage of the dough (4) into said chamber (18), and a second advanced position, in which said thrust member (20) is moved slidingly to the interior of said chamber (18) to intercept at least said portion of said dough to push the latter towards said drum (30); said thrust member (20) being driven by a first motor (28) and said rotating drum (30) being driven by a second motor (33) which is distinct from the first, at least said first motor (28) being an electric motor;
said machine being characterized in that said rotating drum (30) comprises:
- at least a first series of recesses (36) disposed circumferentially on the external surface of said drum (30) and defining a first periodic arrangement of recesses;
- at least a second series of grooves (37) disposed circumferentially on the outer surface of the drum 30 and defining a second periodic arrangement of grooves, preferably different from the first groove pattern; the recesses of the first series (36) of recesses being configured to face at least the first opening (34) of said chamber (18) with a first frequency and the recesses of the second series (37) of recesses being configured to face towards at least the first opening (34) of the chamber (18) with a second frequency, preferably different from the first frequency;
and by the fact that it comprises at least one command and control unit electronically connected at least with the first motor (28) of said thrust member (20) and with the second motor (33) of said rotating drum (30) and is programmed to drive and/or control their rotation speed.

## Description

The present invention relates to a machine for portioning doughs, preferably of a dough for preparing food products and, in particular, for dividing a dough into a plurality of portions.

Machines are known which divide (portion) a dough, preferably a dough based on water and flour to be used for the production of pastry and/or bakery products, into portions of predefined shapes and/or sizes.

Known machines comprise a hopper inside which the dough to be portioned is inserted and/or housed, a conduit that guides it towards an elongated chamber, inside which a cylinder is housed which pushes the dough into hollows of shape and/or size corresponding to those of the portions to be made and made on the external surface of a rotating drum.

Conveniently, the cylinder and the rotating drum are controlled in their translational and rotational movement, respectively, by the same motor, by means of suitable transmission and reduction means.

The rotating drum rotates between at least two positions located at 180° from each other, a first position in which the desired recess faces the cylinder and a second position in which the dough portion is discharged. In some known machines there may be a third processing position, intermediate between said first and said second position, in which the recess can face a machine configured to perform a specific dough processing, for example a rounding machine.

In the traditional technique it is known the possibility of making a plurality of grooves, and more precisely up to four grooves positioned at a distance of 90° from each other, of identical shape and/or dimensions, in order to increase productivity. of the machine by increasing the number of working cycles of the piston compared to those of the rotating drum. It is also known the possibility of providing a second series of grooves, and usually four other grooves, of potentially different shape, rotated by 45° along the circumference of the drum with respect to the first series of grooves, so that the same machine can be used to prepare portions of two different sizes and/or shapes.

Furthermore, in said traditional machines the dough is pushed inside the portioning cavity, and then dragged in rotation by the rotating drum, until it meets a protrusion, which allows any excess dough to be pushed inside the recess and/or back inside the piston chamber.

However, these known machines are not fully satisfactory as they do not allow to carry out an independent adjustment of the piston and of the drum, and this obliges the movements of the two members to be synchronized. This makes it impossible to accurately control the pressure exerted by the piston. Consequently, it is impossible to increase the number of possible products that can be obtained with a single drum. Furthermore, in this way the quantity of dough that remains inside the piston chamber without being inserted in the portioning cavity is subjected to strong mechanical stresses that can ruin the gluten structure of the dough, reducing the quality of the final product.

Machines are also known in which the drum is controlled by a first motor, while the piston is controlled by a second motor, usually hydraulic. However, even this solution is not fully satisfactory since the hydraulic motors are complex to control, and require a large number of connection components to control the operation of the motor, as well as being rather slow, consequently causing a decrease in the productivity of the machine.

Machines are also known in which the piston is controlled by a pneumatic motor. However, even this solution is not fully satisfactory since pneumatic motors are more complex to control, and in particular it is difficult to accurately control the thrust pressure. Furthermore, it is difficult to build motors that allow to reach the powers necessary for this type of work.

Dough portioning machines are also known which are equipped with a thrust member for pushing a dough into at least one recess which is provided in a rotating drum, in which at least one of the aforementioned thrust member and the rotating drum are operated by a engine, especially electric. Examples of such machines are described in documents DE 10249496, EP 2819521, US 4957425, DE 102015217117 and US 4211492.

The purpose of the invention is to propose a portioning machine which allows to overcome the drawbacks of the traditional technique.

Another purpose of the invention is to propose a portioning machine which allows to control the motion of the drum independently from the motion of the piston.

Another object of the invention is to propose a portioning machine which allows to precisely control the motion of the piston.

Another object of the invention is to propose a portioning machine which allows portions of a multiplicity of different shapes and/or sizes to be made.

Another object of the invention is to propose a portioning machine which allows to reduce the mechanical stress to which the dough is subjected.

Another object of the invention is to propose a portioning machine which allows to reduce the quantity of pasta that is subjected to mechanical stress.

Another object of the invention is to propose a portioning machine which allows to increase productivity with respect to known solutions.

Another object of the invention is to propose a portioning machine which is easy to produce and with low costs.

Another object of the invention is to propose a portioning machine which is an alternative and/or improvement to the known solutions.

All these purposes, both individually and in any combination thereof, and others which will result from the following description, are achieved, according to the invention, with a machine having the characteristics indicated in claim 1.

The present invention is further clarified hereinafter in a preferred embodiment thereof, reported for purely illustrative and non-limiting purposes with reference to the attached drawing tables, in which:

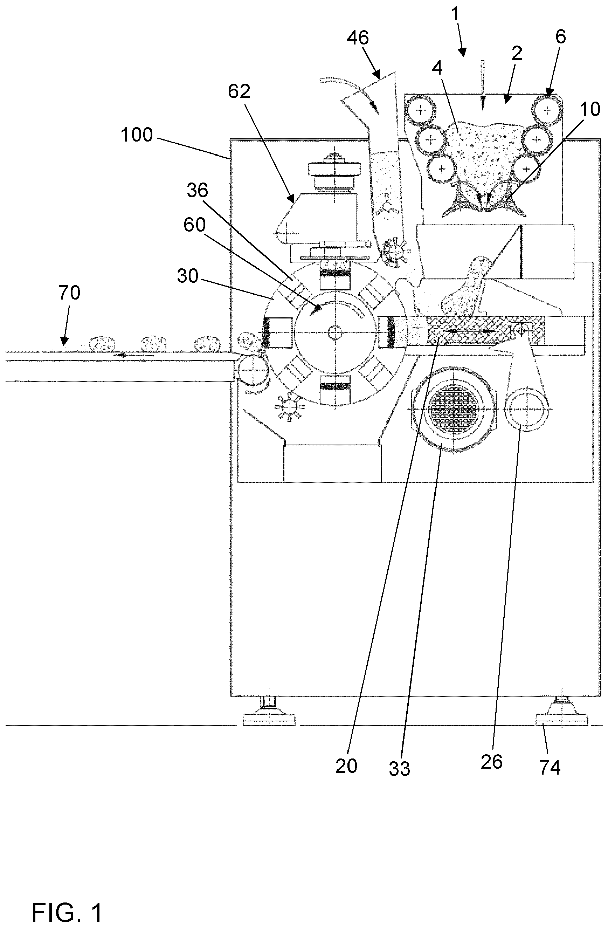

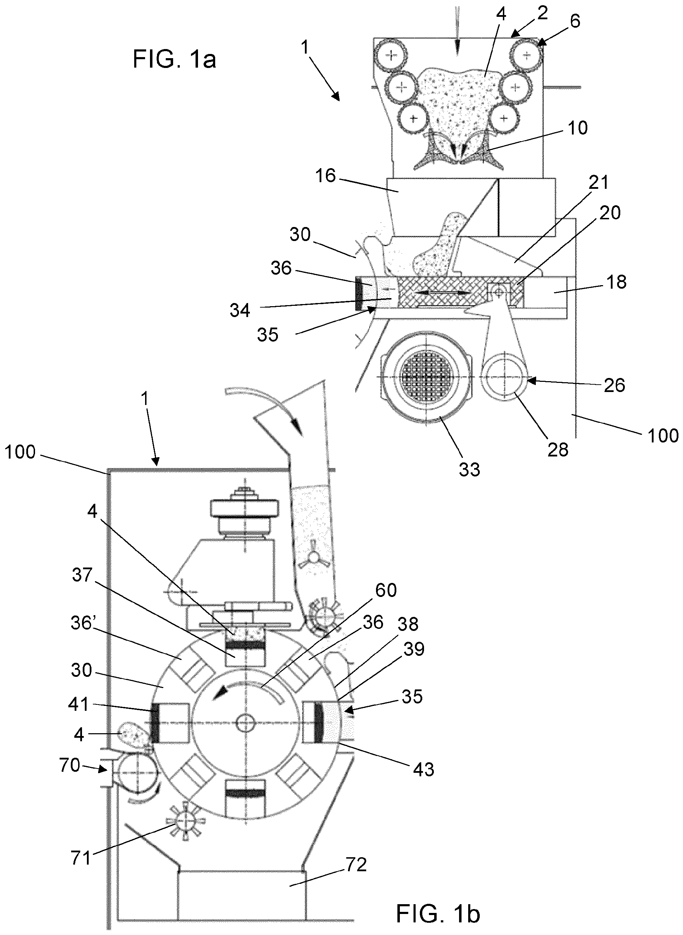

- Figure 1: shows the portioning machine according to the invention in a schematic side view,
- Figure 1 a: shows a detail of figure 1,
- Figure 1b: shows another detail of figure 1

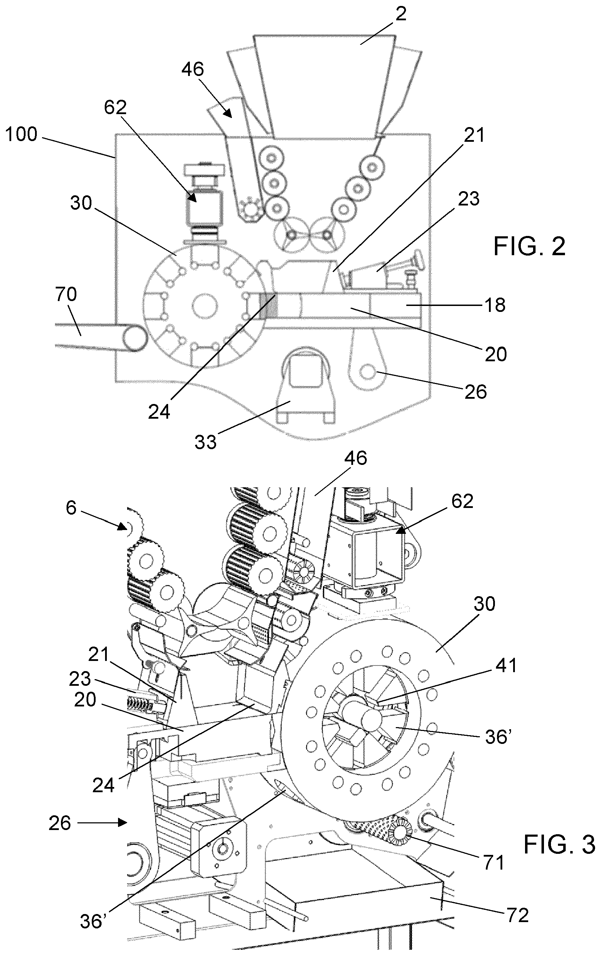

- Figure 2: shows a schematic side view of the portioning machine in a second embodiment,
- Figure 3: shows a detail of the portioning machine in the second embodiment,
- Figure 4: shows a second detail,
- Figure 5: shows a third detail,

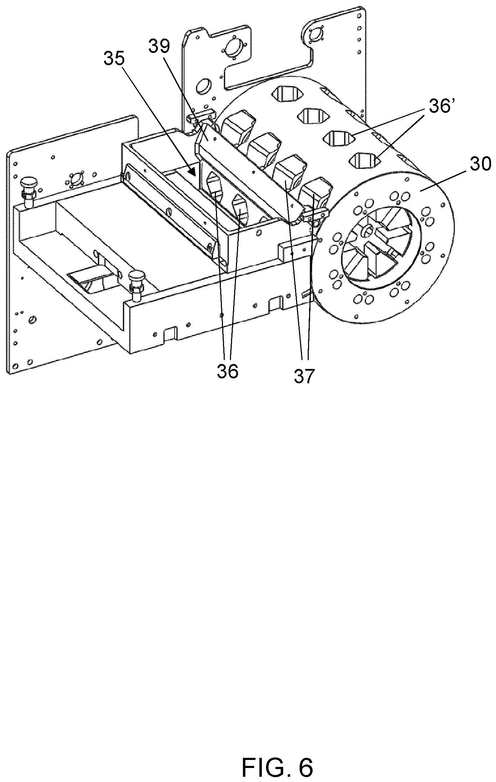

- Figure 6: shows a detail of the drum and the chamber,

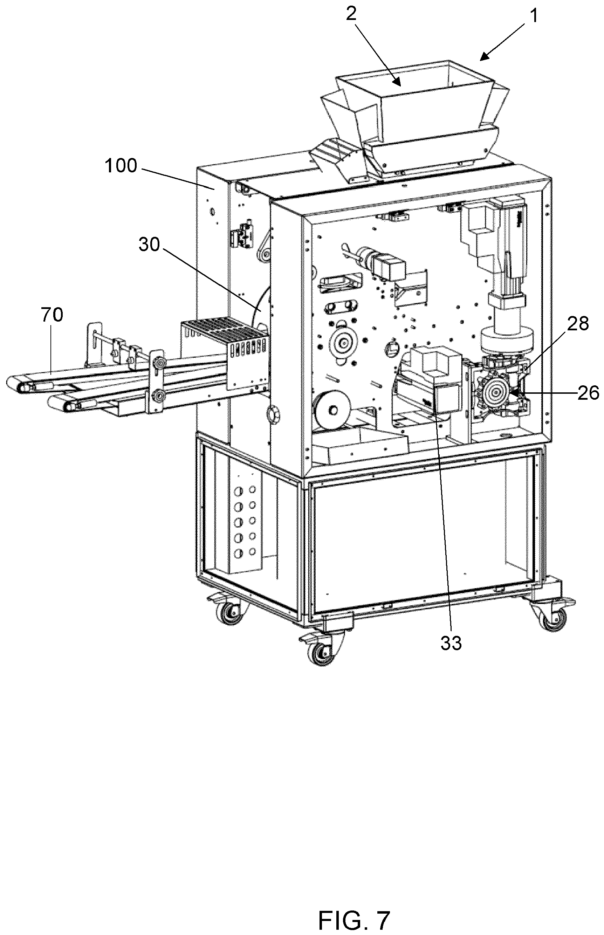

- Figure 7: shows it in a side perspective view and

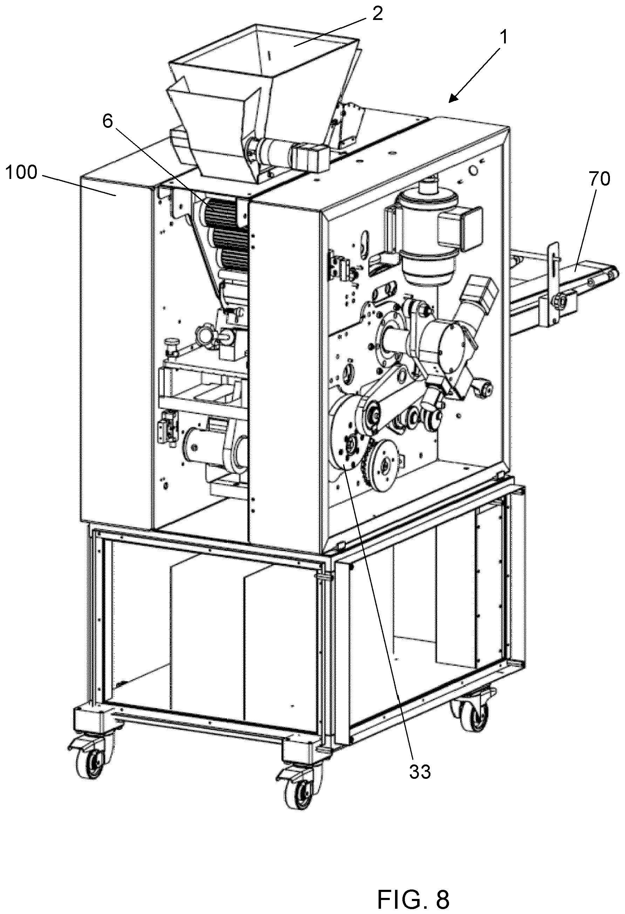

- Figure 8: shows it in a rear perspective view.

The invention preferably relates to a machine 1 for portioning a dough 4 comprising:
- a thrust member 20 configured to push said dough 4 inside at least one recess 36 which is provided in a rotating drum 30, said recess 36 of said rotary drum 30 being configured to be substantially facing said thrust member 20 and to receive a portion of said dough 4,
and characterized in that said thrust member 20 is driven by a first motor 28 and that said rotating drum 30 is driven by a second motor 33 which is distinct from the first, at least said first motor 28 being an electric motor.

Advantageously, the machine 1 comprises a casing 100, preferably hollow, configured to contain, at least partially, the components of the machine itself, as will be described below.

As can be seen from the figures, the machine 1 according to the invention preferably comprises a first hopper 2 to contain the dough 4 to be portioned. Conveniently, the first hopper 2 can be equipped with advancement means 6 to allow the advancement of the dough 4 in the direction of the subsequent processing stations. In particular, said advancement means 6 can comprise a plurality of rollers configured to allow the advancement of the dough 4 and/or the pre-portioning means 10 configured to regulate the quantity of dough 4 exiting the first hopper 2. In particular, the pre-portioning means 10 can comprise two portioning stars rotating in the opposite direction, comprising concavities which define between them a space of suitable dimensions, substantially corresponding to the quantity of dough 4 that must exit from the first hopper 2 in a single processing cycle.

Advantageously, the first hopper 2 can be positioned in a raised position with respect to the rest of the machine so as to exploit the force of gravity to favor the advancement of the dough 4.

Conveniently, upon exiting the pre-portioning means 10, the dough is housed in a second splitting hopper 16 which preferably communicates directly, for example through a suitable hole, with a chamber 18 inside which the thrust member 20 is located. Conveniently in correspondence with the lower edge of said third splitting hopper 16, and more precisely in correspondence with the most advanced edge according to the thrust direction of said thrust member 20, the presence of a first cutting blade 24 is provided, the usefulness of which will be clear later. A rear scraper element 21 is provided at the rear edge of said hole.

Advantageously, the dough can fall from said dividing hopper 16 into said chamber 18 thanks to the action of gravity, and preferably only thanks to the action of the force of gravity.

Conveniently, the chamber 18 has a substantially elongated shape, preferably elongated in the horizontal direction.

Conveniently, the thrust member 20 is movable between a first fully retracted position, in which the connection between the second hopper 16 and the chamber 18 is substantially free and open and allows the dough 4 to pass from the second hopper to the chamber 18, and a second fully advanced position, in which its front end 21 is substantially at the end of the chamber 18.

Conveniently, the thrust member 20 is slidably inserted (preferably to size) inside the chamber 18 and is movable along a direction of movement, substantially parallel (and preferably coinciding) with the first prevalent development direction of the chamber 18, between the aforementioned first retracted position, in which it releases at least one feeding mouth (in particular arranged above the chamber 18 itself) for the passage of the dough 4 into the chamber 18, and the aforementioned second advanced position, in which the thrust member 20 is moved slidably inside the chamber 18 to intercept at least a portion of said dough to push the latter towards the drum 30.

Conveniently in said first position the front end 21 of the thrust member 20 is located before the first cutting blade 24; in particular, the first cutting blade 24 is located between the front end 21 of the thrust member 20 and a drum 30 to which the chamber 18 is connected. During the movement from said first position to said second position, the end 21 of the thrust member 20 overtakes the first cutting blade 24, and in this second condition the front end of the thrust member 20 is in the most advanced position with respect to the position of the first cutting blade 24. In particular, the thrust member 20 is configured to reach a close distance with respect to the drum 30. In the presence of the dough 4 it is also configured to stop before its end of stroke, based for example on the quantity of dough 4 present and/or on the maximum pressure set and/or on the distance set or on other parameters. The thrust member 20 is moved by independent movement means 26, for example an electric motor 28, connected to the thrust member 20 by means of suitable gears and/or reduction means.

Preferably the electric motor 28 is of the torque type or, alternatively, brushless type, preferably with a step-by-step control. Advantageously, the invention, and in particular the command and control unit, is programmed to control the electric motor 28 in order to accurately control the distance traveled by the thrust member 20, the speed and/or acceleration to which it is subjected, and the pressure exerted by the thrust member itself on the dough 4.

Conveniently, the connecting gears between the electric motor 28 can be rigid, allowing the motor 28 to safely control the maximum pressure exerted by the thrust member on the dough 4.

The thrust member 20 is able to move in substantially rectilinear and oscillating motion inside the chamber 18. Advantageously, the speed and/or acceleration to which the thrust member 20 is subjected, and/or the pressure applied by the latter on the dough 4 and/or the torque exerted by the motor 28 can be measured by one or more sensors, electrical and/or digital positioned on the electric motor 28 and/or on the body and/or on the head of the thrust member 20 and/or on one or more of the gears and/or reduction systems which connect the motor 28 to the thrust member 20. Conveniently in this way it is possible to avoid subjecting the dough 4 to excessive stress. Furthermore, in this way it is possible to accurately adjust the quantity of dough which will form the portions emitted by the machine 1, as will be clear later.

Advantageously, the alternating movement of the thrust member 20 is achieved by means of a variation in the direction of rotation of the electric motor 28. This allows to set exactly the distance covered and the pressure exerted by the thrust member 20 at each cycle, which is not possible if a cyclic engine is used.

Conveniently, for example, the pressure exerted by the thrust member 20 on the dough 4 can remain constant throughout the advancement stage. In this way it is possible to move the dough without the risk of compressing it excessively, thus causing degradation, in particular of its gluten structure. This also makes it possible to measure more precisely the quantity of dough 4 which must be worked.

Conveniently, the machine can comprise a spring device 23 configured to load and push the rear scraper 21 which supports the second blade thus keeping it under pressure towards the drum 30 to obtain a precise cut of the dough 4.

In an embodiment not represented in the drawings the machine 1 can comprise at least two thrusting elements 20, preferably housed within the same chamber 18. Alternatively, the thrusting elements 20 can be positioned in different chambers 18, for example fed with different types of dough. Conveniently, the thrust elements 20 can be placed side by side.

Preferably, the thrust elements 20 can be controlled by at least two different motors (one for each thrust element). This is useful in the case in which it is necessary to make large doughs or in the case in which it is desired to increase the productivity of the machine, as it will become clear later, and therefore from the second splitting hopper 16 a large quantity of dough 4 is dropped. In this case, in fact, asymmetries can be created in the arrangement of the dough, and therefore one side of this can be subject to a higher pressure. By inserting a plurality of thrust members and equipping them with an independent control, it is possible to control the pressure applied by each, and therefore the pressure applied to the different sides of the dough 4.

Advantageously, both electric motors can be torque or brushless motors, or in any case controlled by a command and control unit configured to accurately control the distance traveled by the respective thrust members, the speed and/or acceleration to which they are subjected, and the pressure exerted on the dough. This can be particularly advantageous if there are mixes of different types, having different physical and/or chemical properties, in correspondence with two distinct thrust members.

Advantageously, in this way they can be stopped in different positions according to the quantity of dough which is in the right and left side of the chamber 18 thus ensuring a constant pressure and therefore greater precision.

The machine 1 further comprises a rotating drum 30. Conveniently, the drum is free for most of the external surface, ie it is not contained within a closed environment. Preferably, the drum 30 has a substantially cylindrical shape, with the axis of rotation substantially horizontal. Alternatively, it can have a substantially vertical axis of rotation. The drum 30 can conveniently rotate clockwise or counterclockwise. Advantageously, the drum can be constrained inside the casing 100.

Advantageously, the rotating drum 30 is equipped with an axis of rotation which is substantially transverse with respect to the prevailing direction of development of the chamber 18 and in particular parallel to the direction of movement of the thrust member 20.

Advantageously, the drum 30 is put into rotation by a motor 33 which is different and distinct with respect to the motor 28 which moves the thrust member. In this way it is possible to decouple the movement of the thrust member 20 from that of the drum 30, allowing greater flexibility of use of the machine 1. In particular, unlike the known machines which use a single motor to move both devices , it is possible to move the drum 30 without the thrust member 20 moving accordingly, so as to wait for the drum 30 to be in a suitable position before moving the thrust member 20.

Conveniently the chamber 18, preferably rectangular in shape, comprises a first opening 34 which puts the chamber 18 in which the thrust member 20 is contained into communication with the rotating drum 30. Conveniently on the outer surface of the rotating drum 30, and preferably at least in the positions which, during motion of the drum itself, there are a plurality of recesses 36, 36', 37, face the first opening 34. Conveniently said recesses 36 can have different shapes, preferably hexagonal but can be circular, rectangular, octagonal or squared. Conveniently, said recesses 36 can have different or identical dimensions and/or shapes.

Advantageously, the rotating drum 30 comprises at least a first series of grooves 36 arranged circumferentially on the outer lateral surface of the drum 30 and defining a first periodic arrangement and/or pattern and/or pattern of grooves.

With the term periodic arrangement and/or pattern and/or alternance of grooves, we mean, in the meaning of this patent, at least a predetermined succession of the aforementioned grooves arranged on the external surface of the drum 30. This succession may for example provide that the grooves of the series are equally spaced along the external surface, for example spaced by equal and/or multiple angles from each other, in particular in constant angular positions. Otherwise, the recesses can be arranged along the external surface of the drum 30 according to an arbitrary pattern, for example periodic, and/or regular and/or random.

Advantageously, moreover, the rotating drum 30 comprises at least a second series of grooves 37 arranged circumferentially on the external surface of the drum 30 and defining a second periodic arrangement and/or pattern and/or pattern of grooves, preferably different from the first pattern of grooves.

Conveniently, the recesses 36 of the first series of recesses are configured to face at least the first opening 34 of the chamber 18 with a first frequency and the recesses 37 of the second series are configured to face towards the chamber 18 with a second frequency, preferably different from the first frequency. Advantageously, said first frequency can be different from said second frequency for an additive constant, and preferably only by an additive constant. Said first frequency and said second frequency are substantially defined by the mutual angular spacing of the recesses 36 of said first series and by the reciprocal angular spacing of the recesses 37 of said second series and by the rotation speed of the drum 30. In one embodiment it is provided that the recesses 36 and 37 are not equally spaced, but that the rotation speed of the drum 30 is varied, in order to maintain a regular frequency of the recesses 36, 37 facing the chamber 18.

In accordance with a particular non-limiting embodiment of the present invention, said grooves 36, 37 are divided into at least two series, a first series comprising four substantially identical grooves 36 and a second series comprising four substantially identical grooves 37 but of different shape and/or size with respect to the grooves 36 of the first series. Conveniently, the four grooves of each series can be separated by 90° from each other, and the grooves of the first series can be separated by 45° with respect to those of the second series. In essence, therefore, during its rotation, the drum has a first recess of a first shape and/or size in correspondence with the first opening 34 and therefore of the chamber 18. It is then rotated by 45°, and has a second recess 37 of a second shape and/or size in correspondence with the first opening 34, and therefore in the chamber 18. Subsequently, following a further rotation of 45° (and therefore a total rotation of 90°) presents in correspondence with the first opening 34 and therefore of the chamber 18, a recess 36 having a shape and/or size substantially corresponding to that of the first recess 36'. Conveniently, therefore, the rotating drum 30 during normal processing performs rotations with a pitch equal to 90°, so as to present, in correspondence with the first opening 34, recesses 36,36' of the same shape and/or size. Conveniently, in case it is necessary to make a change of format, it is possible that the rotating drum 30 performs a first rotation of 45° so as to present in correspondence with the first opening 34 a recess 37 belonging to the second series of shape and/or dimensions substantially different from that those of the recesses 36, 36' and substantially corresponding to the shape and/or size of the portions to be obtained. The drum 30 is then rotated by 90° so as to have a further recess 37' belonging to the second series.

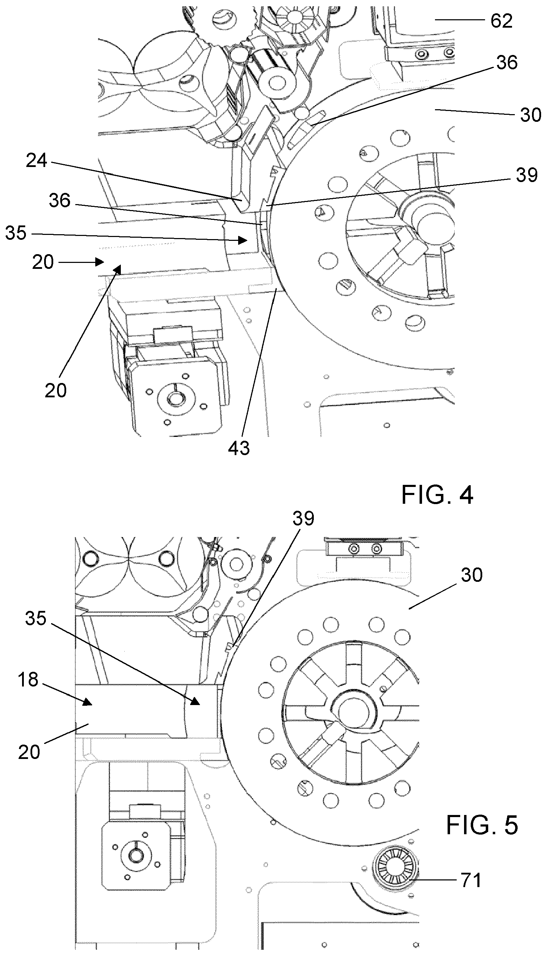

In another embodiment, the recesses 36, 37 present on the surface of the drum 30 can all be of different shape and/or dimensions, and separated by an angle as desired. In particular, therefore, there may be an unlimited number of series of different recesses on the surface of the drum 30. In this way it is possible to further increase the number of products of different shape and/or weight that can be made with the machine 1 according to the invention without the need to replace the drum 30. Conveniently in an embodiment shown in Figure 5 on the surface of the drum 30 a plurality of grooves 36 (for example four grooves) can be provided, all substantially in the same angular position with respect to the direction of rotation of the drum 30. In this way, for each rotation of the drum, a plurality of recesses 36 faces the first opening 34, allowing the simultaneous realization of a plurality of dough portions 4.

Advantageously, the fact that the thrust member 20 and the drum 30 are moved by two different motors 28, 33 allows the drum 30 to be kept in rotation and to move the thrust member 20 only when in correspondence with the first opening 34 there is a recess 36 having the appropriate shape/size. This is not possible if the drum and the thrust member are moved by the same motor, as happens in the case of traditional machines, since in this case it is necessary to synchronize the two movements.

Conveniently each recess 36, 36', 37 can have a movable bottom 41, configured to move in the radial direction, so as to facilitate the loading and/or unloading of the dough 4 from the recess itself and also guarantee the rounding of the portions of dough.

Conveniently, with the drum 30 in a position in which a recess 36 is in correspondence with the first opening 34 and/or faces the first chamber 18, a tunnel 35 is substantially defined between the same chamber and the recess 36, suitable to allow the passage of the dough from chamber 18 to recess 36. Conveniently, the thrust member 20 is configured to be moved with said recess 36 aligned with said first opening 34 and said chamber 18.

Conveniently, said machine 1 may have, downstream of the first opening 34 in the direction of rotation of the drum 30, a wall 38 at one end of which there is a second cutting blade 39 configured to substantially contact and/or intercept the external wall of the drum 30.

Conveniently the wall 38 is configured to contain the portion of dough that protrudes outside the recess 36 and, cooperating with the second cutting blade 39 configured to cut any portion of dough 4 which protrudes from the recess 36 following the filling operations of the recess itself, allows to reduce the shear friction to which the portion of dough present inside the recess 36 is subjected.

Advantageously in this way the portion of dough which has not been inserted inside the recess 36 is found in an advanced position with respect to the portion of dough which descends from the splitting hopper 16, and therefore is inserted into the recess 36 in the next step.

This allows to reduce to a minimum the number of times in which a portion of pasta is subjected to the thrust of the thrust member 20, improving the final quality of the dough and safeguarding the gluten structure of the same.

Advantageously, at the edge of the first opening 34 upstream according to the direction of rotation of the drum 30, a scraper 43 is provided, configured to substantially contact the outer wall of the drum 30. In this way the second cutting blade 39 and the scraper 43 advantageously constitute the respectively upper and lower walls of the tunnel 35.

Conveniently the machine 1 can comprise one or more successive processing stations.

For example, it may comprise a flouring station 46 configured to deposit an additional layer of flour on the dough 4 which is located inside the recess 36. The flouring station 46 comprises a flour duster.

Furthermore, the machine 1 can comprise a rounding station 62. Conveniently, the rounding station 62 can comprise a rounding unit which comprises one or more machines which allow to obtain a dough 4 having a substantially spherical and/or cylindrical shape while this is inside the recess 36. Advantageously this allows to obtain a final product which has the desired shape and/or dimensions, and is therefore ready for the subsequent operations. Conveniently, the further processing stations 46, 62 are located in correspondence with the rotary path of the drum, so as to be substantially facing the recesses 36, 37 during the rotary motion of the drum itself.

The machine 1 according to the invention can conveniently be connected to a production line. For example, there may be a subsequent processing station 70, represented by a conveyor belt configured to transport the dough 4 to a further processing station, positioned substantially 180° downstream of the first opening 34. Preferably in the case in which the subsequent processing station 70 is represented by a conveyor belt which can be positioned just below the fourth opening 68, so that the portion of dough 4 can fall onto the conveyor belt thanks to gravity and inertia due to the rotation of the rotating drum 30.

Conveniently, downstream of the discharge opening 68, the machine 1 can comprise one or more scraping brushes, and preferably a scraping brush 71 configured to scratch the surface of the drum 30 so as to eliminate possible residues of dough 4. Conveniently the brush 71 can be positioned in correspondence with a collector drawer 72. Preferably the collector drawer can be positioned in a substantially lower position with respect to the brush 71, so as to collect the remains of dough 4 removed from the surface of the drum 30 thanks to the brush itself and fallen due to the simple effect of gravity.

Conveniently the machine 1, and in particular the casing 100, can be supported by a plurality of feet 74. Alternatively, in an embodiment not shown, it can be positioned on displacement means, for example a plurality of wheels, which allow to move it from one location to another on a production line, or from one production line to another.

Advantageously, the machine 1 comprises a command and control unit (not shown) which allows to control the electric motor 28, and the sensors associated with the thrust member 20.

Preferably, the command and control unit is electronically connected at least with the first motor 28 of the thrust member 20 and with the second motor 33 of the rotating drum and is programmed to drive and/or control their rotation speed.

Preferably, in this way the command and control unit substantially controls the movement of the thrust member 20. The command and control unit also controls the operation of the second motor 33, and therefore substantially controls the movement of the rotating drum 30. Advantageously, in this way, therefore, the command and control unit can control the synchronization of the two devices, and therefore substantially in correspondence with which recesses 36, 36', 37 present on the external surface of the drum 30 the dough 4 loading operations must take place. Preferably, the command and control unit is configured to drive the first motor 28 to synchronize the motion of said thrust member 20 along its direction of movement with the second motor 33 with the first frequency of the first series of grooves and/or the second frequency of the second series of grooves.

More in detail, the command and control unit is programmed to drive the first motor 28 to move the thrust member 20 so that its end 21 is placed in correspondence with the first opening 34 of the chamber 18 selectively at the first frequency with which the first recesses of the first series of recesses face towards the first opening 34 and/or at the second frequency in which the second recesses of the second series of recesses face towards the second opening 34, to receive a corresponding portion of dough.

Advantageously, the command and control unit can operate using the thrust member 20 as "master" and the rotating drum 30 as "slave", ie moving the rotating drum 30 as a consequence of the readings obtained on the position and/or speed/acceleration of the thrust member and/or on the pressure exerted by the latter on the dough 4 and/or on the torque exerted by the electric motor 28 and/or on any other suitably measured value, or vice versa operate using the rotating drum 30 as " master "and the thrust 20 as" slave ". Conveniently the machine comprises an apparatus for reversing the motion, configured to reverse the motion of the thrust member 20 at a predefined moment and suitably selectable by the user. Conveniently, this can be carried out for example when the drum 30 has performed a rotation such as to guarantee complete cutting of the dough 4. Advantageously, the apparatus substantially comprises an electronic cam. In particular, the command and control unit can be configured so that the two motors 28, 33 are connected to each other so that the movements of one are controlled by the movements of the other according to a master/slave. Preferably, the motor 33 which moves the drum 30 can act as master, and the motor 28 which moves the thrust member 20 can act as a slave. In this case, for example, the motor 33 can rotate the drum 30 by a certain angle, for example until it brings a recess 36 in correspondence with the first opening 34, and subsequently the motor 28 is activated which moves the thrust member 20 which pushes the dough 4 inside the recess 36. Subsequently, the motor 33 can drive the drum 30 so as to make it rotate, for example, until the first cutting blade is able to remove the excess dough, and subsequently the motor 28 can be operated so as to withdraw the thrust member 20.

Furthermore, the command and control unit can conveniently control the operation of the machinery present in correspondence with the further processing stations 46, 62 present inside the machine 1.

The operation of the machine 1 is clear from the above. The dough 4 is loaded into the hopper 2, and made to slide downwards by gravity with the help of the means 6, and in particular the rollers 8. Subsequently it is divided into smaller portions by the pre-portioning means 10, and in in particular, for example by the two pre-portioning stars 12, 12', to then enter the second splitting hopper 16. Conveniently, the connection between the second hopper 16 and the chamber 18 is blocked by the thrust member 20 which is in the position fully advanced from the previous cycle.

Conveniently, the electric motor 28 is operated so as to withdraw the thrust member 20 to the fully retracted position. In this way, the connection between the second hopper 16 and the chamber 18 is conveniently opened, allowing a portion of the dough 4 to fall into the chamber itself.

Subsequently, the electric motor 28 is operated again so as to push the thrust member 20 towards the fully advanced position, so as to push the dough that was present inside the chamber 18 in the movement. Conveniently if in the chamber 18 there was an excessive quantity of dough, this is found to protrude inside the second hopper 16, and therefore while it is pushed by the thrust member 20 it is cut by the first cutting blade 24, and therefore remains inside the second hopper, since the connection between the second hopper itself and the chamber 18 is now closed by the body of the thrust member 20. Conveniently, thanks to the presence of the first cutting blade 24, there are no tears between the portion of dough 4 which is pushed by the member thrust 20 inside the chamber 18 and the one that remains inside the second hopper 16, thus avoiding damaging the gluten structure of the dough or.

Conveniently, the movement of the thrust member 20 can be adjusted by the electric motor 28 on the basis of the indications of the one or more sensors. Advantageously, said movement can be adjusted on the basis of the pressure exerted by the thrust member 20 on the dough 4, or on the basis of the speed or acceleration of the thrust member itself, or on the basis of other parameters which may depend on the viscosity and/or the mechanical strength of the dough 4 and/or the desired production speed. In this way it is easy to block the movement of the thrust member 20 when the recess 36 is full of dough 4, without it being necessary to excessively compress the latter. This can be achieved for example by monitoring the position of the thrust member and inserting one or more limit switches, preferably electronic and/or digital, connected to the brushless motor 28 to block the movement of the thrust member 20. Alternatively this can be achieved by one or more pressure sensors.

Simultaneously or subsequently to this movement, the second motor 33 can be operated in such a way as to allow rotation of the drum 30, until the recess 36 having the desired shape and/or size is located in correspondence with the first opening 34. Advantageously, it is noted here how the two movements (that of the thrust member 20 and that of the rotating drum 30) can be separated and distinguished from each other. This allows the drum 30 to be rotated at will during a single movement of the thrust member 20, and thus to obtain that in correspondence with the first opening 34 there is the recess 36 which has the desired shape and/or size, regardless of its position before the start of the machining cycle. On the contrary, in known machines which use the same motor to move both the thrust member and the rotating drum, the drum itself can rotate only by a predefined arc during a single movement of the thrust member, thus making crucial the positioning of the recesses 36 with the desired characteristics. This greatly limits the flexibility of the machine, which is able to produce only a small quantity (usually 2) of portions of different types without requiring the replacement of the drum or without entailing a drastic decrease in productivity.

Conveniently when the recess 36 is in correspondence with the first opening 34, the tunnel 35 is advanced until it enters the recess itself, and allows the passage of the dough inside the recess 36. Conveniently, the thrust member 20 pushes forward until the detected pressure reveals that the recess is completely full. At this point the electric motor 28 can advantageously be stopped quickly. Once the desired thrust pressure has been reached, the motor 28 maintains this pressure constant until the drum completes the cutting of the dough by rotating. At this point it can be set in motion in the reverse direction, so as to withdraw the thrust member 20 inside the chamber 18.

Subsequently, the second motor 33 is set in motion so as to allow the advancement of the drum 30. Advantageously if there is a certain quantity of dough 4 that protrudes outside it is cut by the cutting blade 39, and remains inside the chamber 18.

Subsequently, the drum 30 is rotated until the recess 36 is in correspondence of the subsequent processing stations 46,62 in order to proceed with the processing.

At the same time, consequently, the recesses 36', 37 which were located upstream of the recess 36 just filled according to the direction of rotation of the drum 30, pass to be, in sequence, in correspondence with the first opening 34. Conveniently therefore if therecess 36' has the desired shape and/or size characteristics, the thrust member 20 is reactivated thanks to the electric motor 28. Otherwise, the same remains stationary and waits for a further rotation of the drum 30 until the recess 37 is located at the first opening 34. In this way it is possible to make a series of products all having the same shape and/or size, or alternatively it is possible to make products of different shape and/or size by exploiting the difference in shape and/or or dimension between the recesses 36 and 37.

Advantageously, the recess 36 can be subsequently transferred to a flouring machine, configured to allow the addition of flour to the dough 4. Subsequently, the drum can be further rotated until the cavity 36 and therefore the dough 4 is brought into correspondence with a rounding machine which allows the dough 4 to be rounded inside the cavity 36.

Then the drum 30 can be rotated further so as to bring the recess 36 in correspondence with a discharge, which therefore allows the dough to come out of the drum 30 and be transported to a subsequent processing station 70.

Conveniently the drum is further made to rotate until it passes in correspondence with a brush 71 which allows to scrape any remains of dough that has remained glued to the external walls of the drum 30, which fall into the collecting drawer 72.

Subsequently, the drum 30 is further rotated so as to bring the recess 36 back to the first opening 34 and allow a new cycle.

Conveniently, a cycle can last approximately between 1 and 8 seconds, for a total of 500-2500 cycles/hour (normally 1200 cycles per hour).

As is clear from what has been said, the machine 1 according to the invention is particularly advantageous in that:
- allows to prepare portions of dough of a plurality of different shapes and/or sizes without having to change the rotating drum,
- allows precise control of the loading process, avoiding subjecting the dough to unnecessary mechanical stress,
- allows to maintain a high productivity.

The present invention has been illustrated and described in a preferred embodiment thereof, but it is understood that executive variations may be applied to it in practice, without however departing from the scope of protection of the present patent for industrial invention.

## Claims

1. Machine (1) portioning a dough (4) comprising:
- a chamber (18), which develops along a first prevalent development direction,
- a thrust member (20) configured to push at least a portion of said dough (4) inside at least one recess (36) which is provided in a rotating drum (30), which is provided with a substantially transversal with respect to the prevailing development direction of said chamber (18); said recess (36) of said rotating drum (30) being configured to be substantially facing a first opening (34) of said chamber (18) and to said thrust member (20) and to receive a portion of said dough (4),
- said thrust member (20) being slidably inserted inside said chamber (18) and being movable along a movement direction, substantially parallel with the first prevalent development direction of said chamber (18), between a first retracted position, in which said thrust member (20) releases at least one feeding mouth for the passage of the dough (4) into said chamber (18), and a second advanced position, in which said thrust member (20) is moved slidingly to the interior of said chamber (18) to intercept at least said portion of said dough to push the latter towards said drum (30); said thrust member (20) being driven by a first motor (28) and said rotating drum (30) being driven by a second motor (33) which is distinct from the first, at least said first motor (28) being an electric motor;
said machine being **characterized in that** said rotating drum (30) comprises:
- at least a first series of recesses (36) disposed circumferentially on the external surface of said drum (30) and defining a first periodic arrangement of recesses;
- at least a second series of grooves (37) disposed circumferentially on the outer surface of the drum 30 and defining a second periodic arrangement of grooves, preferably different from the first groove pattern; the recesses of the first series (36) of recesses being configured to face at least the first opening (34) of said chamber (18) with a first frequency and the recesses of the second series (37) of recesses being configured to face towards at least the first opening (34) of the chamber (18) with a second frequency, preferably different from the first frequency;
and by the fact that it comprises at least one command and control unit electronically connected at least with the first motor (28) of said thrust member (20) and with the second motor (33) of said rotating drum (30) and is programmed to drive and/or control their rotation speed.

2. Machine (1) according to claim 1, **characterized in that** said command and control unit is configured to drive said first motor (28) so as to synchronize the motion of said thrust member (20) along its direction of movement with said second motor (33) with the first frequency of the first series of grooves and/or the second frequency of the second series of grooves.

3. Machine according to claim 2, **characterized in that** the command and control unit is programmed to drive the first motor (28) to move the thrust member (20) so that one of its ends (21) is placed at the first opening (34) of the chamber (18) selectively at the first frequency with which the first grooves of the first series of grooves are turned towards the first opening (34) and/or at the second frequency at which the second grooves of the second series of hollows are turned towards the second opening (34), to receive the corresponding portion of dough.

4. A machine (1) according to one of the preceding claims, **characterized in that** said first motor (28) is a torque motor.

5. Machine according to one or more of the preceding claims **characterized in that** it comprises an apparatus for reversing the direction of rotation of said first motor (28) and/or said second motor (33), said reversing apparatus comprises an electronic cam and is implemented inside a command and control unit of the machine (1).

6. Machine according to one or more of the preceding claims, **characterized in that**:
- said thrust member (20) is housed and is movable in said first chamber (18), and
- at the inlet of said first chamber (18) there is a first cutting blade (24) configured to separate the portion of dough (4) which is pushed towards said recess (36).

7. Machine according to one or more of the preceding claims, **characterized in that** it comprises a first opening (34) for putting said first chamber (18) into communication with said recess (36) of said rotating drum (30), and which downstream of said first opening in the direction of rotation of the drum (30) there is a second cutting blade (39) configured to remove any dough (4) left outside the recess (36).

8. Machine according to one or more of the preceding claims **characterized in that** it comprises a wall (38) positioned downstream of said first opening (34) in the direction of advancement of said drum (30) and that said second cutting blade (39) it extends from one end of said wall (38).

9. Machine according to one or more of the preceding claims **characterized in that** it comprises at least one processing station (46, 62) configured to carry out a rounding process of the dough present inside the recess (36).

10. Machine according to one or more of the preceding claims **characterized in that** said rotating drum (30) comprises at least a third series of recesses (36, 37) which have different shapes and/or dimensions, and are turned towards said first opening (34) with a third frequency which is preferably different from said first and said second frequency.

11. Machine according to one or more of the preceding claims, **characterized in that** it comprises a tunnel (35) which is positioned between said recess (36) of said rotating drum (30) and said first chamber (18) and which is configured to contain the dough which must be transferred from said first chamber (18) to said recess (36).

12. Machine according to one or more of the preceding claims **characterized in that** said command and control unit is electronically connected to motorization means of an automated loading unit, said command and control unit being configured for:
- controlling said means for motorizing the loading unit to thus allow said dough (4) to enter said first chamber (18),
- controlling said first motor (28) for driving said thrust member (20) to thus push said dough (4) in the direction of said first opening (34),
- driving said second motor (33) to rotate said drum (30) until a recess (36,37) of suitable shape and/or dimensions is in correspondence with and/or aligned with said first opening (34).

13. Machine according to one or more of the preceding claims **characterized in that** each recess (36, 36', 37) can have a movable bottom (41), configured to move in the radial direction, so as to facilitate loading and/or unloading of the dough (4) from the hollow itself and also guaranteeing the rounding of the dough portions.

14. Machine according to one or more of the preceding claims, **characterized in that** it comprises a plurality, and preferably a pair, of thrust members (20), positioned inside the same chamber (18).

15. Machine according to one or more of the preceding claims **characterized in that** each thrust member (20) is moved by a corresponding motor.
